(19) Europäisches Patentamt
European Patent Office
Office européen des brevets

(11) EP 1 382 427 B1

(12) FASCICULE DE BREVET EUROPEEN

(45) Date de publication et mention de la délivrance du brevet:
**15.09.2010 Bulletin 2010/37**

(51) Int Cl.:
***B29C 45/14*** (2006.01) ***B62D 25/16*** (2006.01)

(21) Numéro de dépôt: **03291791.6**

(22) Date de dépôt: **18.07.2003**

# (54) Procédé de réalisation d'un passage de roue de véhicule automobile et passage de roue obtenu par mise en oeuvre de ce procédé

Verfahren zur Herstellung einer Radlaufschale und damit hergestellte Radlaufschale

Process for manufacturing a vehicle mud guard and mud guard made thereby

(84) Etats contractants désignés:
**DE ES FR GB IT**

(30) Priorité: **18.07.2002 FR 0209145**

(43) Date de publication de la demande:
**21.01.2004 Bulletin 2004/04**

(73) Titulaire: **COMPAGNIE PLASTIC OMNIUM**
**69007 Lyon (FR)**

(72) Inventeurs:
- **Banry, Pascal**
  **01800 Bourg Saint Christophe (FR)**
- **Gille, Denis**
  **01100 Bellignat (FR)**
- **Cottet, Pierre**
  **01430 Lantenay (FR)**
- **Gilotte, Philippe**
  **01470 Benonces (FR)**

(74) Mandataire: **de la Bigne, Guillaume Michel Marie et al**
**Lhermet La Bigne & Rémy**
**11, boulevard de Sébastopol**
**75001 Paris (FR)**

(56) Documents cités:
**DE-A- 3 712 882** **DE-A- 19 930 762**
**FR-A- 2 816 266** **US-B1- 6 349 987**

- **KAUFMANN G: "WERKZEUG ZUM UMSPRITZEN SCHALLDAEMMENDER TEXTILIEN" KUNSTSTOFFE, CARL HANSER VERLAG. MUNCHEN, DE, vol. 89, no. 9, septembre 1999 (1999-09), pages 118-120, XP000958436 ISSN: 0023-5563**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne un procédé de réalisation d'un passage de roue de véhicule automobile et le passage de roue obtenu par mise en oeuvre de ce procédé.

Dans la présente description, on désigne par passage de roue la pièce entourant la partie supérieure d'une roue dans un véhicule automobile. Cette pièce est généralement fixée sous une aile de la carrosserie et sert à arrêter des gouttes d'eau et autres projectiles provenant de la chaussée.

D'autres désignations couramment utilisées pour cette pièce sont «élément de passage de roue » ou encore « pare-boue ».

On sait que les passages de roue sont des sources de bruits du fait des vibrations et des impacts qu'ils subissent lors du roulement du véhicule.

Une solution connue pour atténuer ce phénomène consiste à remplacer la partie rigide du passage de roue, exposée aux projections provenant du pneu en rotation, par une moquette qui amortit les impacts et les vibrations subies.

Par exemple, du brevet allemand DE19817567, on connaît un passage de roue constitué par un corps en matière thermoplastique et par une moquette qui occupe la partie du corps située dans le prolongement radial de la roue lorsque le passage de roue est monté sur le véhicule.

La moquette est divisée en rectangles maintenus par leurs bords, qui sont noyés dans le corps en matière thermoplastique, lequel comporte des bandes de matière séparant les rectangles de moquette.

Ces bandes remplissent une fonction de rigidification qui, d'une part, empêche la moquette de s'affaisser au droit de la roue et, d'autre part, assure la rigidité d'ensemble du corps et donc du passage de roue.

Un des avantages d'un tel passage de roue est que sa réalisation ne met en oeuvre qu'une opération de moulage par injection, la liaison entre la moquette et la matière thermoplastique résultant de l'infiltration de la matière thermoplastique à l'état fondu dans l'épaisseur de la moquette au moment de l'injection.

Toutefois, ce procédé présente l'inconvénient que la matière thermoplastique fondue a tendance à s'infiltrer dans l'épaisseur de la moquette au-delà des bords des rectangles.

En particulier, la phase de compactage accentue ce phénomène d'infiltration indésirable de la matière thermoplastique dans la moquette. On rappelle que la phase de compactage est la deuxième phase du procédé d'injection, lequel comprend tout d'abord une phase de remplissage du moule par de la matière fondue, puis une phase de compactage de ladite matière, au cours de laquelle la matière ne pénètre plus dans le moule mais sa pression est accrue pour assurer le maintien en forme de la pièce lors de sa solidification.

Par ailleurs, la moquette peut faciliter cette infiltration en comportant des irrégularités d'épaisseur ou de densité.

D'autres passages de roue de véhicule automobile sont connus des documents DE 199 30 762 et FR 2 816 266.

La présente invention vise à proposer une solution simple et économique aux problèmes exposés ci-dessus.

La présente invention a pour objet un procédé de réalisation d'un passage de roue de véhicule automobile comportant un corps en matière thermoplastique muni d'une ouverture et une moquette obturant cette ouverture en étant fixée au corps par des bandes de matière thermoplastique solidaires dudit corps, procédé dans lequel on injecte les bandes de matière thermoplastique sur la moquette, on les laisse se solidifier au contact de ladite moquette, et on forme, sur au moins une bande de matière thermoplastique, un bord d'épaisseur réduite par rapport au reste de la bande, caractérisé en ce que, en section transversale, l'épaisseur du bord est liée à la largeur *l* du bord par une fonction mathématique f telle que :

$$\int_0^l f(x)dx \geq h^2 ,$$

où h est la hauteur du bord à la jonction avec la bande.

Grâce à ce procédé, le bord d'épaisseur réduite de la bande de matière thermoplastique commence sa solidification dès la fin de la phase de remplissage et avant la mise sous pression de la matière injectée lors de la phase de compactage.

De cette manière, le bord de moindre épaisseur constitue une barrière qui s'oppose aux infiltrations dans la moquette de la matière non encore solidifiée présente dans le reste de la bande de matière thermoplastique.

L'inégalité précitée concernant la fonction f traduit le fait que le bord est globalement plus large que haut.

La barrière formée par le bord s'oppose donc de façon préférentielle aux infiltrations de matière non encore solidifiée selon des directions parallèles à la moquette.

Dans un mode de réalisation particulier, la différence d'épaisseur entre la bande et le bord est marquée par un décrochement, ce qui permet de délimiter nettement le bord à solidification rapide constituant la barrière anti-infiltration.

Dans un mode de réalisation particulier de l'invention, la périphérie de l'ouverture du corps forme les bandes de matière thermoplastique assurant la fixation de la moquette au corps.

De telles bandes ne comportent qu'un seul bord de moindre épaisseur, du côté de la moquette.

Dans un autre mode de réalisation de l'invention, compatible avec le précédent, on forme des bandes de matière thermoplastique dans la région de la moquette obturant l'orifice. Ces bandes peuvent ou non rejoindre la périphérie de l'ouverture.

Dans ce cas, chaque bande est bordée de moquette sur ses deux côtés et comporte, de préférence, deux bords de moindre épaisseur, un sur chaque côté.

Dans le cas particulier d'une bande qui ne serait pas réunie à la périphérie de l'ouverture, il serait avantageux de former un bord de moindre épaisseur sur tout le contour de la bande.

Dans un mode de réalisation particulier, deux bandes de matière plastique sont présentes sur deux faces opposées de la moquette, prise en sandwich entre ces deux bandes. Ces deux bandes forment une structure rigide qui confère une plus grande rigidité au passage de roue.

La présente invention a également pour objet un passage de roue constitué par un corps en matière thermoplastique muni d'une ouverture et par une moquette obturant cette ouverture en étant fixée au corps par des bandes de matière thermoplastique solidaires dudit corps, injectées sur ladite moquette et solidifiées au contact de celle-ci, au moins une bande comportant un bord dont l'épaisseur est réduite par rapport au reste de la bande, caractérisé en ce que, en section transversale, l'épaisseur du bord est liée à la largeur *l* du bord par une fonction mathématique f telle que :

$$\int_0^l f(x)dx \geq h^2 ,$$

où h est la hauteur du bord à la jonction avec la bande.

Afin de faciliter la compréhension de l'invention, on va maintenant en décrire des exemples non limitatifs, à l'aide des dessins annexés dans lesquels :

- la figure 1 est une vue en perspective de trois quarts d'un passage de roue selon un mode de réalisation de l'invention,
- la figure 2 est une section selon II-II de la figure 1,
- la figure 3 est une section analogue à celle de la figure 2 d'un passage de roue selon un autre mode de réalisation de l'invention,
- la figure 4 est une vue en perspective d'une partie d'un passage de roue selon un autre mode de réalisation de l'invention,
- la figure 5 est une section analogue à celle de la figure 2 d'un bord dont l'épaisseur décroît régulièrement,
- la figure 6 est une section analogue à celle de la figure 2 d'un bord présentant un décrochement,
- la figure 7 est une section analogue à celle de la figure 2 d'un bord selon un autre mode de réalisation.

L'élément de passage de roue représenté à la figure 1 comprend un corps qui présente une forme générale conventionnelle apte à enrober une roue (non représentée). A cet effet, il comprend un flanc intérieur 2 prolongé par une partie radiale cylindrique 3, elle-même terminée par un rebord extérieur.

Un tel passage de roue est destiné à se loger à l'intérieur d'une aile avant droite (non représentée) d'un véhicule automobile.

Une large ouverture 5 est formée dans la partie radiale 3, au droit de la roue lorsque le passage de roue est monté sur le véhicule.

Comme cela est connu, cette ouverture 5 est obturée par une moquette 6 qui est réunie au corps par surmoulage localisé. Les régions de surmoulage sont, dans cet exemple, d'une part, la périphérie 7 de la moquette et, d'autre part, des ponts 8 de matière parallèles et perpendiculaires entre eux, s'étendant transversalement et longitudinalement à l'ouverture 5 en joignant deux côtés opposés de celle-ci.

La périphérie 7 et les ponts de matière 8 sont venus de moulage avec les parties pleines du corps. Ils constituent des bandes de matière au sens de la présente description.

Pour réaliser le passage de roue, on place un rectangle de moquette d'un seul tenant couvrant toute l'ouverture 5 dans un moule d'injection (non représenté) et on introduit la matière thermoplastique dans le moule, dont l'empreinte délimite les parties pleines du corps, c'est-à-dire son flanc intérieur 2, le rebord extérieur 4 et la partie complémentaire à l'ouverture dans la partie radiale cylindrique 3, ainsi que les ponts de matière 8.

Dans les bandes de matière 7 situées à la périphérie de la moquette et au droit des ponts de matière 8, la matière thermoplastique fondue pénètre dans la moquette et s'y solidarise lorsqu'elle se solidifie.

Comme on le voit sur la section de la figure 2, ces bandes 8 de matière thermoplastique comportent, d'une part, une partie massive 8a qui est dimensionnée de manière à conférer la rigidité requise au passage de roue et, d'autre part, un bord 8b de moindre épaisseur qui, dans l'exemple représenté, est clairement délimité par décrochement formant une marche d'escalier.

A la périphérie de la moquette, le bord 8b de moindre épaisseur n'est présent que du côté de la zone imprégnée réalisant la jonction avec la moquette. Dans les ponts de matière, le bord 8b est présent de chaque côté.

Une fois la phase d'injection achevée, c'est-à-dire dès que la cavité du moule est remplie, on augmente la pression de la matière thermoplastique afin de la compacter, comme cela est connu.

A cet instant précis marquant la fin de la phase d'injection et le début de la phase de compactage, les bords 8b de moindre épaisseur de chaque région imprégnée ont commencé à se solidifier, de sorte que le compactage a lieu sans que la matière n'infiltre la moquette 6, de manière indésirable, au-delà des régions délimitées par l'empreinte du moule.

Le compactage peut donc être effectué complètement sans nuire à l'efficacité de la moquette, qui demeure intacte en-dehors des zones d'imprégnation.

Dans l'exemple de la figure 3, la moquette 16 est prise en sandwich entre deux bandes 18, 19 de matière plastique, situées de part et d'autre de ladite moquette, sur chaque face de celle-ci.

Comme précédemment décrit, chaque bande présente une partie centrale massive et deux bords de moindre épaisseur.

L'ensemble constitué par la moquette et les deux bandes forme une structure sandwich de plus grande rigidité, qui accroît la rigidité d'ensemble du passage de roue.

Dans l'exemple de la figure 4, le passage de roue comporte une bande de matière plastique 28, à bords 28a d'épaisseur réduite, qui est surmoulée sur la moquette 26 mais n'est pas reliée à la périphérie de l'ouverture 25 du passage de roue.

Une telle bande peut avoir différentes fonctions, et notamment celle de lutter contre des vibrations ou des mises en résonance de la moquette à certaines fréquences critiques pour le fonctionnement du véhicule, en jouant le rôle de masselotte, avec une fonction cumulée de rigidification.

L'exemple de la figure 5 représente une bande munie d'un bord dont l'épaisseur décroît de manière proportionnelle à une abscisse x variant entre 0 et *l*, où *l* est la largeur de la bande. Ici, on a f(0)=h.

Il s'agit du cas limite dans lequel $\int_0^l f(x)dx = h^2$. En effet, la surface du bord en forme de triangle est alors égale à $\frac{2*h*h}{2} = h^2$.

La figure 6 représente le cas où le bord forme un escalier, ce qui correspond à un décrochement. La condition $\int_0^l f(x)dx \geq h^2$ signifie alors que la marche est plus large que haute.

La figure 7 représente le cas où la jonction entre la bande et le bord n'est pas nettement visible. La fonction de barrière du bord est assurée si, conformément à l'invention, il est possible de positionner cette jonction de manière à respecter l'inégalité $\int_0^l f(x)dx \geq h^2$. Cette condition est bien respectée ici, sur le dessin.

Il est bien entendu que l'exemple décrit ci-dessus ne présente aucun caractère limitatif, la portée de l'invention étant définie par les revendications.

## Revendications

1. Procédé de réalisation d'un passage de roue de véhicule automobile comportant un corps en matière thermoplastique muni d'une ouverture (5,25) et une moquette (6) obturant cette ouverture en étant fixée au corps par des bandes (7,8 ;18,19) de matière thermoplastique solidaires dudit corps, procédé dans lequel on injecte les bandes (7,8 ;18,19) de matière thermoplastique sur la moquette (6), on les laisse se solidifier au contact de ladite moquette, et on forme, sur au moins une bande (7,8 ;18,19 ;28) de matière thermoplastique, un bord (7b,8b) d'épaisseur réduite par rapport au reste de la bande, **caractérisé en ce que**, en section transversale, l'épaisseur du bord est liée à la largeur 1 du bord par une fonction mathématique f telle que :

$$\int_0^l f(x)dx \geq h^2,$$

où h est la hauteur du bord à la jonction avec la bande.

2. Procédé selon la revendication 1, dans lequel la différence d'épaisseur entre le bord (7a, 8a) et le reste de la bande est marquée par un décrochement.

3. Procédé selon l'une des revendications 1 et 2, dans lequel la périphérie de l'ouverture (5) du corps forme les bandes (7) de matière thermoplastique assurant la fixation de la moquette (6) au corps (1).

4. Procédé selon l'une quelconque des revendications 1 à 3, dans lequel on forme des bandes (8) de matière thermoplastique dans la région de la moquette obturant l'orifice (5).

5. Procédé selon la revendication 4, dans lequel chaque bande (8) est bordée de moquette sur ses deux côtés et comporte, de préférence, deux bords (8b) de moindre épaisseur, un sur chaque côté.

6. Procédé selon l'une quelconque des revendications 1 à 5, dans lequel deux bandes (28) de matière plastique sont présentes sur chaque face de la moquette (26), prise en sandwich entre lesdites bandes.

7. Procédé selon l'une quelconque des revendications 1 à 6, dans lequel au moins une bande (8) rejoint la périphérie (5) de l'ouverture du passage de roue.

8. Procédé selon l'une quelconque des revendications 1 à 7, dans lequel au moins une bande (28) est isolée de la périphérie de l'ouverture (25) du passage de roue.

9. Passage de roue constitué par un corps (1) en matière thermoplastique muni d'une ouverture (5) et par une moquette (6) obturant cette ouverture en étant fixée au corps par des bandes (7, 8) de matière thermoplastique solidaires dudit corps, injectées sur ladite moquette et solidifiées au contact de celle-ci, au moins une bande (7, 8) comportant un bord (7b, 8b) dont l'épaisseur est réduite par rapport au

reste de la bande, **caractérisé en ce que**, en section transversale, l'épaisseur du bord est liée à la largeur 1 du bord par une fonction mathématique f telle que :

$$\int_0^l f(x)dx \geq h^2 ,$$

où h est la hauteur du bord à la jonction avec la bande.

## Claims

1. A method of making a motor vehicle wheel arch comprising both a body of thermoplastic material provided with an opening (5,25), and a mat (6) closing said opening and fixed to the body by strips (7, 8;10, 19) of thermoplastic material secured to said body, the method comprising injecting the strips (7, 8; 18, 19) of thermoplastic material onto the mat (6), allowing them to solidify in contact with said mat, and forming on at least one strip (7, 8; 18, 19; 28) of thermoplastic material an edge (7b, 8b) of thickness that is reduced relative to the thickness of the remainder of the strip, wherein, in cross-section, the thickness of the edge is related to the width 1 of the edge by a mathematical function f such that:

$$\int_0^1 f(x)dx \geq h^2 ,$$

where h is the height of the edge at its junction with the strip.

2. A method according to claim 1, in which the difference in thickness between the edge (7a, 8 a) and the remainder of the strip is marked by a step.

3. A method according to claim 1 or 2, in which the periphery of the opening (5) of the body forms the strips (7) of thermoplastic material for fixing the mat (6) to the body (2).

4. A method according to any one of claims 1 to 3, in which strips (8) of thermoplastic material are formed in the region closing the orifice (15) of the mat.

5. A method according to claim 4, in which each strip (8) is adjacent to the mat on both sides and preferably has two edges (8b) of smaller thickness, one on each side.

6. A method according to any one of claims 1 to 5, in which two strips (28) of plastics material are present on respective faces of the mat (26), which is sandwiched between said strips.

7. A method according to any one of claims 1 to 6, in which at least one strip (8) is connected to the periphery (5) of the opening in the wheel arch.

8. A method according to any one of claims 1 to 7, in which at least one strip (28) is isolated from the opening (25) in the wheel arch.

9. A wheel arch constituted by a body (1) of thermoplastic material having an opening (5) and by a mat (6) closing said opening and fixed to the body by strips (7, 8) of thermoplastic material secured to said body, the strips being injected onto said mat and solidified in contact therewith, at least one strip (7, 8) having an edge (7b, 8b) of thickness that is reduced relative to the thickness of the remainder of the strip, wherein, in cross-section, the thickness of the edge is related to the width 1 of the edge by a mathematical function f such that:

$$\int_0^1 f(x)dx \geq h^2 ,$$

where h is the height of the edge at its junction with the strip.

## Patentansprüche

1. Verfahren zum Herstellen einer Radlaufschale eines Kraftfahrzeugs, die einen Körper aus Thermoplastmaterial aufweist, der mit einer Öffnung (5, 25) und einem Teppich (6) versehen ist, der diese Öffnung verschließt, indem er an dem Körper durch Bänder (7, 8; 18, 19)aus Thermoplastmaterial, die fest mit dem Körper verbunden sind, befestigt wird, wobei man bei dem Verfahren die Bänder (7, 8; 18, 19) aus Thermoplastmaterial auf den Teppich (6) spritzt, sie in Berührung mit dem Teppich (6) verfestigen lässt und auf mindestens einem Band (7, 8; 18, 19; 28) aus Thermoplastmaterial einen Rand (7b, 8b) mit einer Stärke bildet, die im Vergleich zum Rest des Bands verringert ist, **dadurch gekennzeichnet, dass** die Stärke des Rands im Querschnitt mit der Breite 1 des Rands durch eine mathematische Funktion f derart korreliert ist, dass

$$\int_0^1 f(x)dx \geq h^2 ,$$

wobei h die Höhe des Rands an der Verbindung mit dem Band ist.

2. Verfahren nach Anspruch 1, bei dem der Stärkenunterschied zwischen dem Rand (7a, 8a) und dem Rest des Bands durch einen Rücksprung markiert

ist.

**3.** Verfahren nach einem der Ansprüche 1 und 2, bei dem die Peripherie der Öffnung (5) des Körpers Bänder (7) aus Thermoplastmaterial bildet, die das Befestigen des Teppichs (6) am Körper (1) sicherstellen.

**4.** Verfahren nach einem der Ansprüche 1 bis 3, bei dem man Bänder (8) aus Thermoplastmaterial in dem Bereich des Teppichs, der die Öffnung (5) verschließt, ausbildet.

**5.** Verfahren nach Anspruch 4, bei dem jedes Band (8) mit Teppich auf seinen zwei Seiten umrandet ist und vorzugsweise zwei Ränder (8b) mit geringerer Stärke auf jeder Seite aufweist.

**6.** Verfahren nach einem der Ansprüche 1 bis 5, bei dem zwei Bänder (28) aus Plastikmaterial auf jeder Seite des Teppichs (26), der zwischen den Bändern ins Sandwich genommen ist, gegenwärtig sind.

**7.** Verfahren nach einem der Ansprüche 1 bis 6, bei dem mindestens ein Band (8) die Peripherie (5) der Öffnung der Radlaufschale erreicht.

**8.** Verfahren nach einem der Ansprüche 1 bis 7, bei dem mindestens ein Band (28) von der Peripherie der Öffnung (25) der Radlaufschale isoliert ist.

**9.** Radlaufschale bestehend aus einem Körper (1) aus Thermoplastmaterial, versehen mit einer Öffnung (5) und einem Teppich (6), der diese Öffnung verschließt und dabei an dem Körper befestigt ist, durch Bänder (7, 8) aus Thermoplastmaterial, die fest mit dem Körper verbunden sind, die auf den Teppich gespritzt und in Berührung mit diesem verfestigt sind, wobei mindestens ein Band (7, 8) einen Rand (7b, 8b) aufweist, dessen Stärke im Vergleich zu den Rest des Bands geringer ist, **dadurch gekennzeichnet, dass** die Stärke des Rands im Querschnitt mit der Breite 1 des Rands durch eine mathematische Funktion f korreliert ist, so dass:

$$\int_0^1 f(x)dx \geq h^2 ,$$

wobei h die Höhe des Rands an der Verbindung mit dem Band ist.

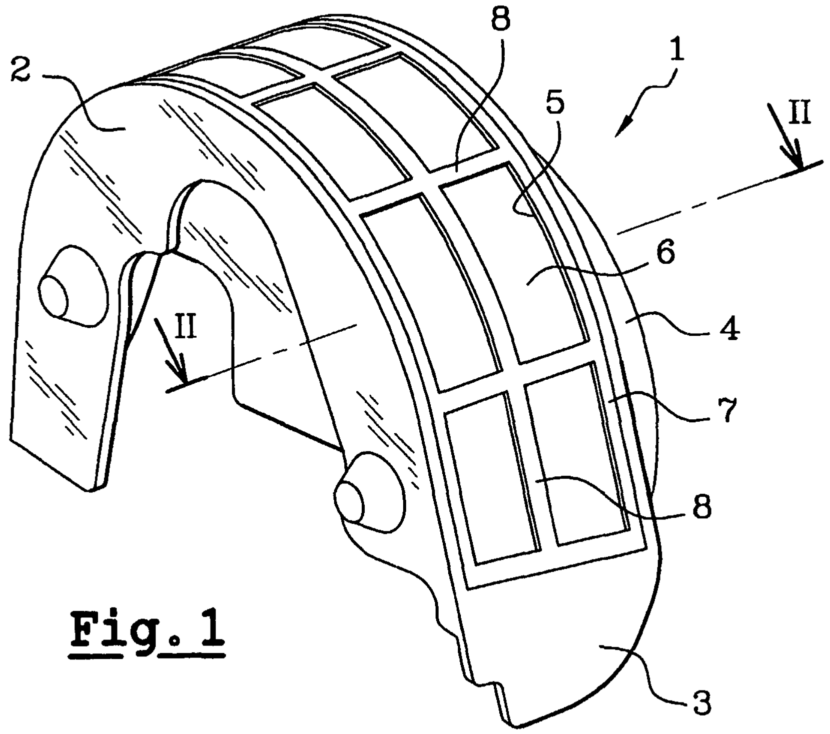


Fig. 1

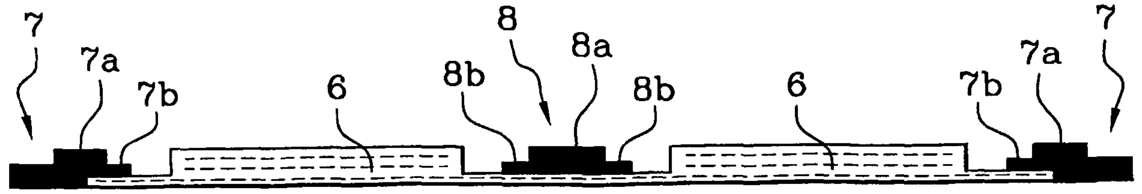


Fig. 2

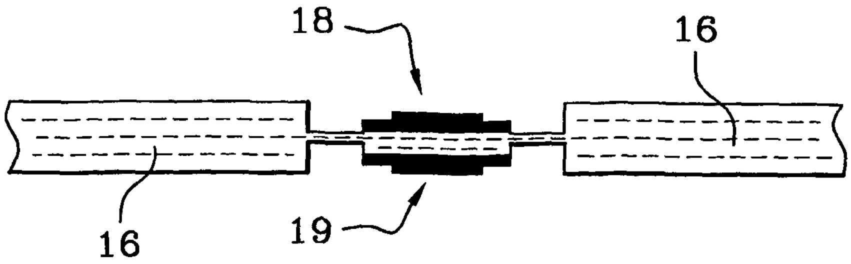


Fig. 3

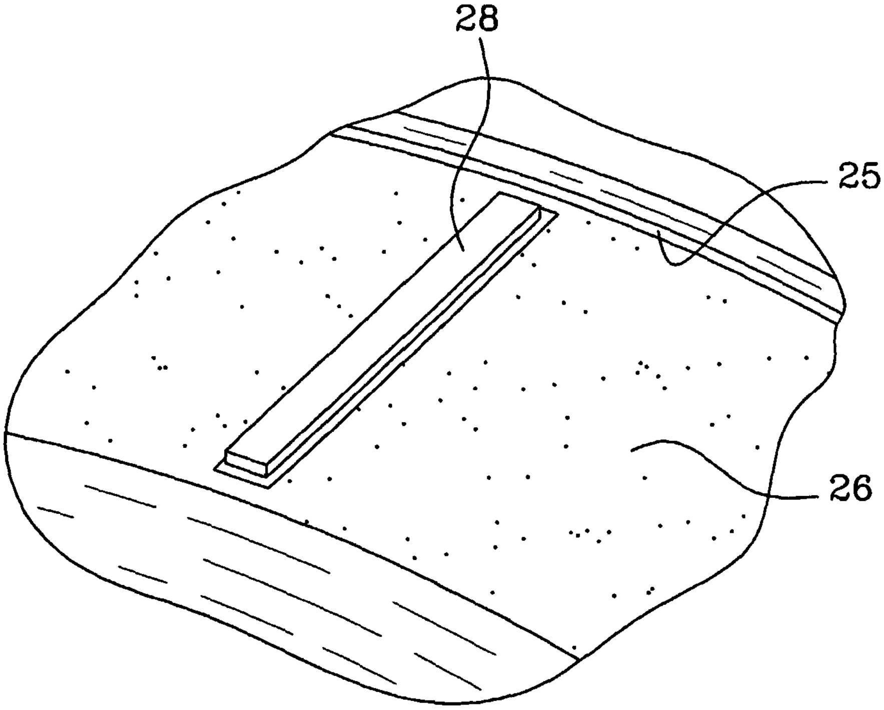


Fig. 4

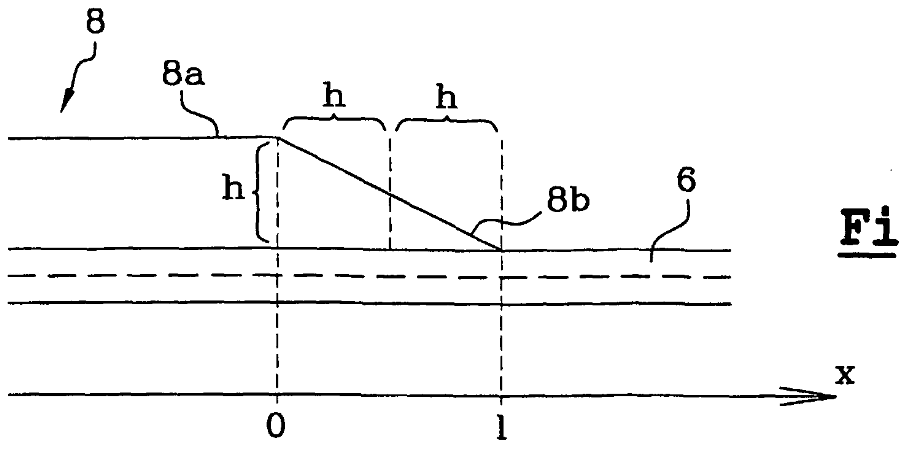


Fig. 5

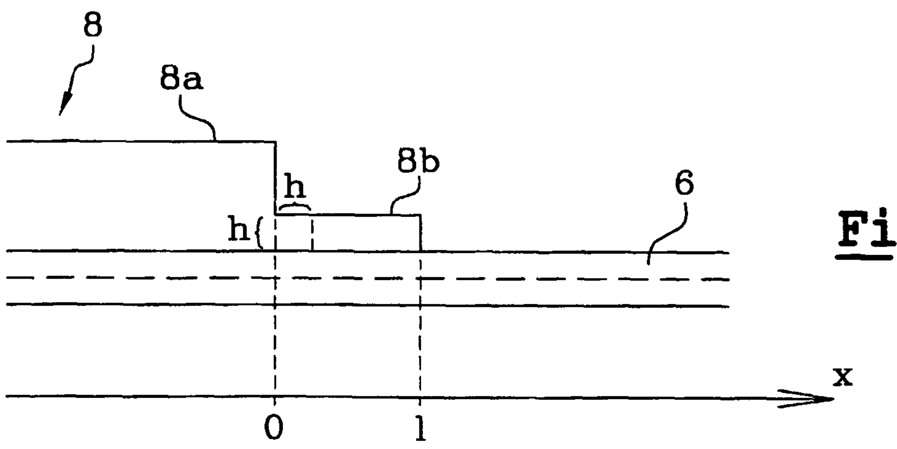


Fig. 6

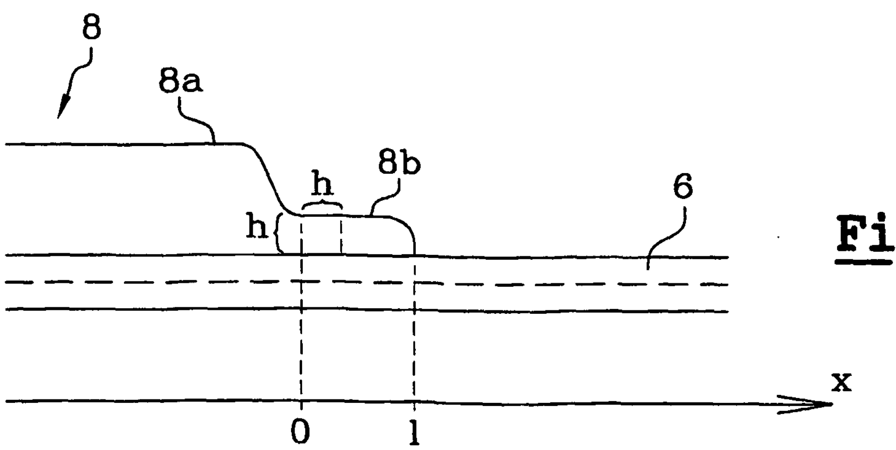


Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- DE 19817567
- DE 19930762
- FR 2816266